# EUROPEAN PATENT APPLICATION

(11) **EP 4 091 784 A1**
(43) Date of publication of application: **23.11.2022**
(21) Application number: 22168868.2
(22) Date of filing: 19.04.2022
(51) Int. Cl.: B29C 33/00, B29C 45/00, D06F 39/02

(54) **CLOTHES TREATING DEVICE INCLUDING DRAWER PANEL**

(30) Priority: 14.05.2021 CN 202121031343 U
(71) Applicant: BSH Hausgeräte GmbH, 81739 München (DE)
(72) Inventor: Zhang, Haiyan, Nanjing (CN); Ye, Jiandong, Nanjing, 210033 (CN); Chen, Lijun, Nanjing, 210000 (CN)

(57) **Abstract**

The invention relates to a clothes treating device (100) including a drawer panel (10). The drawer panel (10) includes: a first portion (12), including a first front surface (14), a first rear surface (16), an assembling portion (18), and a decoration portion (20) at least partially enclosing the assembling portion (18); and a second portion (22), engaged with the first rear surface (16) and including a mounting portion (24). In this way, the first portion (12) of the drawer panel (10) of the clothes treating device (100) can be easily replaced.

## Description

The invention relates to a clothes treating device including a drawer panel.

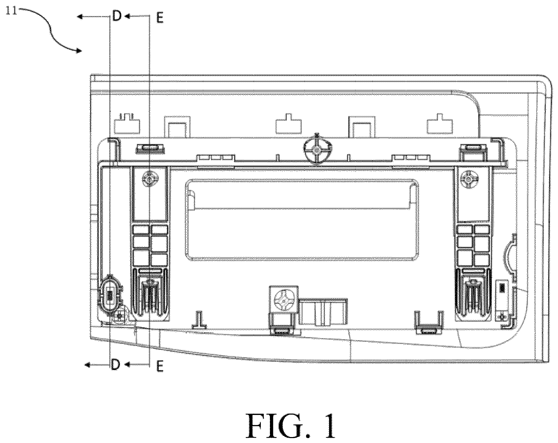

The drawer panel of the existing clothes treating device is usually an integral component with a complex structure, as shown in FIG. 1. FIG. 1 is a schematic rear view of a drawer panel of an existing clothes treating device.

However, the integral component is disadvantageous when a certain portion of the drawer panel needs to be replaced, for example, the integral component can only be replaced as a whole but cannot be partially replaced, thus causing high replacement cost and inconvenient operation.

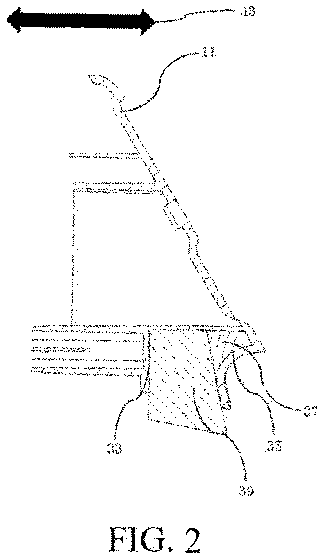

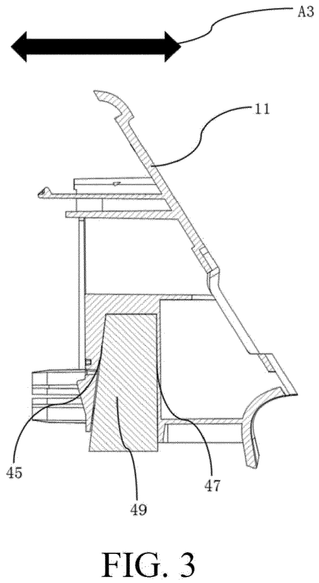

In addition, a demolding direction of the drawer panel may be provided with two opposite faces interfering with the demolding direction, so that the drawer panel requires mold sliders during injection molding and demolding, so that a mold and a manufacturing process of the drawer panel are complex. FIG. 2 and FIG. 3 are respectively schematic cross-sectional views of the drawer panel in FIG. 1 along lines D-D and E-E in a manufacturing process. For example, referring to FIG. 2, a demolding direction A3 of a drawer panel 11 is provided with two opposite faces 33 and 35 interfering with A3, so that the drawer panel 11 requires a first slider 37 and a second slider 39 during injection molding and demolding. For example, when the drawer panel 11 is demolded, the first slider 37 needs to first move leftward to enter an accommodation space (not shown in the figure) of the second slider 39 and then move downward together with the second slider 39. In this way, a mold and a manufacturing process of the drawer panel 11 are complex. Alternatively, for example, referring to FIG. 3, a demolding direction A3 of the drawer panel 11 is provided with two opposite faces 45 and 47 interfering with A3, so that the drawer panel 11 requires a third slider 49 during injection molding and demolding. For example, when the drawer panel 11 is demolded, the third slider 49 needs to move downward. In this way, the mold and the manufacturing process of the drawer panel 11 are also complex.

A purpose of the invention is to provide an improved clothes treating device including a drawer panel. For the above purpose, embodiments of the invention relate to a clothes treating device including a drawer panel, where the drawer panel includes: a first portion, including a first front surface, a first rear surface, an assembling portion, and a decoration portion at least partially enclosing the assembling portion; and a second portion, engaged with the first rear surface and including a mounting portion.

In this way, the first portion of the drawer panel of the clothes treating device can be easily and inexpensively replaced.

In some embodiments, the first portion is a plastic part formed through injection molding, and is provided with a first demolding direction, and the first portion does not include two opposite faces interfering with the first demolding direction in the first demolding direction.

In this way, a mold slider may not be used when the first portion is manufactured, which can help to simplify a mold and a manufacturing process of the drawer panel of the clothes treating device.

In some embodiments, the second portion is a plastic part formed through injection molding, and is provided with a second demolding direction, and the second portion does not include two opposite faces interfering with the second demolding direction in the second demolding direction.

In this way, a mold slider may not be used when the second portion is manufactured, which can help to simplify the mold and the manufacturing process of the drawer panel of the clothes treating device.

In some embodiments, the first portion includes a first fitting portion assembled with the second portion, the mounting portion includes a second fitting portion assembled with the first fitting portion, and the first fitting portion is located at the first rear surface.

In this way, the second portion can be engaged with the first rear surface of the first portion. In some embodiments, the first fitting portion is located at the assembling portion.

In this way, the aesthetics of the appearance of the drawer panel of the clothes treating device can be improved.

In some embodiments, the first fitting portion includes a convex column, and the second fitting portion includes a hole.

In this way, fitting between the first fitting portion and the second fitting portion can be simply and easily realized.

In some embodiments, the convex column extends rearward from the first rear surface in the first demolding direction.

In this way, the first portion can have a simple structure, and the mold slider may not be used, which can help to simplify the mold and the manufacturing process of the drawer panel of the clothes treating device.

In some embodiments, the second portion includes a second front surface and a second rear surface, and the second front surface and the first rear surface are engaged with each other. In this way, the first portion and the second portion can be engaged together in a front-rear direction.

In some embodiments, the mounting portion includes a first engagement portion extending rearward from the second rear surface in the second demolding direction, the second portion includes a partition that is located between and separates the first engagement portion and the second front surface, and the partition includes a solid portion and/or a hollow portion running through the solid portion in the second demolding direction.

In this way, the second portion can have a simple structure, and the mold slider may not be used, which can help to simplify the mold and the manufacturing process of the drawer panel of the clothes treating device.

In some embodiments, the mounting portion includes a second engagement portion that is depressed rearward from the second front surface and bent downward to extend, the second engagement portion includes a droop portion, and the second portion includes a cavity opposite to the droop portion.

In this way, the second portion can have a simple structure, and the mold slider may not be used, which can help to simplify the mold and the manufacturing process of the drawer panel of the clothes treating device.

In some embodiments, the first rear surface completely covers the second front surface.

In this way, the aesthetics of the appearance of the drawer panel of the clothes treating device can be improved.

In some embodiments, the first portion includes a first reference portion, and the second portion includes a second reference portion corresponding to the first reference portion.

In this way, the first portion and the second portion can be positioned relative to each other and engaged.

In some embodiments, the first reference portion is located at the first rear surface, and the second reference portion is located at the second front surface.

In this way, the first reference portion and the second reference portion can simply and conveniently correspond to each other.

In some embodiments, the first reference portion and the second reference portion abut against each other.

In this way, the first portion and the second portion can be accurately positioned relative to each other.

In some embodiments, the first reference portion includes a protruding portion, and the second reference portion includes a concave hole portion capable of accommodating the protruding portion.

In this way, the first reference portion and the second reference portion can be precisely positioned relative to each other.

If technical conditions permit, the subject matter claimed by any independent claim in this application can be combined with a single subject matter or a combination of a plurality of subject matters claimed by any dependent claims to form a novel subject matter.

This application is further described below with reference to the accompanying drawings. Same or similar reference numerals are used in the figures to denote same or similar elements in different embodiments, and descriptions of the same or similar elements in different embodiments, as well as descriptions of elements, features, and effects in the related art may also be omitted.
FIG. 1 is a schematic rear view of a drawer panel of an existing clothes treating device;
FIG. 2 is a schematic cross-sectional view of the drawer panel in FIG. 1 along a line D-D in a manufacturing process;
FIG. 3 is a schematic cross-sectional view of the drawer panel in FIG. 1 along a line E-E in a manufacturing process;
FIG. 4 is a schematic three-dimensional diagram of a clothes treating device including a drawer panel according to an embodiment of the invention;
FIG. 5 is a schematic three-dimensional diagram of the drawer panel in FIG. 4 from a perspective;
FIG. 6 is a schematic three-dimensional diagram of the drawer panel in FIG. 4 from another perspective;
FIG. 7 is a schematic rear view of a first portion of the drawer panel in FIG. 4;
FIG. 8 is a schematic three-dimensional diagram of a second portion of the drawer panel in FIG. 4;
FIG. 9 is a schematic cross-sectional view along a line A-A in FIG. 7;
FIG. 10 is a schematic rear view of a second portion;
FIG. 11 is a schematic cross-sectional view along a line B-B in FIG. 10; and
FIG. 12 is a schematic cross-sectional view along a line C-C in FIG. 10.

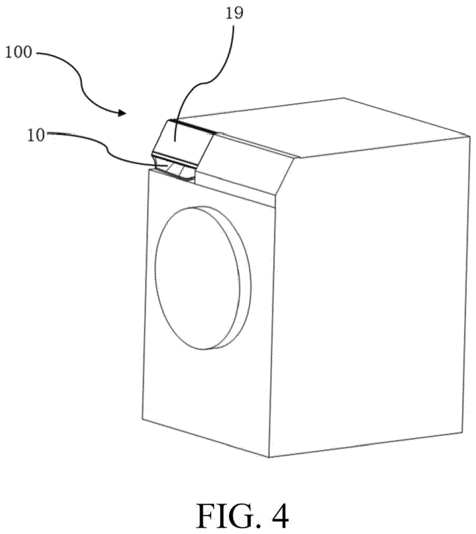

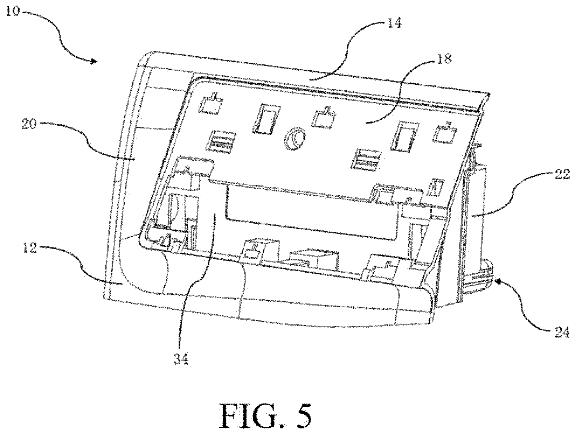

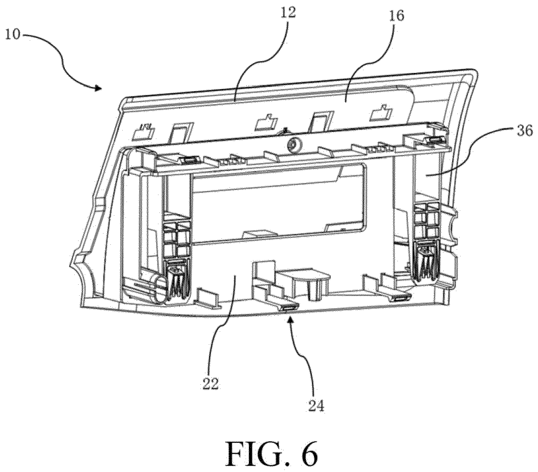

FIG. 4 is a schematic three-dimensional diagram of a clothes treating device including a drawer panel according to an embodiment of the invention. FIG. 5 is a schematic three-dimensional diagram of the drawer panel in FIG. 4 from a perspective. FIG. 6 is a schematic three-dimensional diagram of the drawer panel in FIG. 4 from another perspective. As shown in FIG. 4 to FIG. 6, embodiments of the invention relate to a clothes treating device 100 including a drawer panel 10, where the drawer panel 10 includes: a first portion 12, including a first front surface 14, a first rear surface 16, an assembling portion 18, and a decoration portion 20 at least partially enclosing the assembling portion 18; and a second portion 22, engaged with the first rear surface 16 and including a mounting portion 24.

In this way, the first portion 12 of the drawer panel 10 of the clothes treating device 100 can be easily and inexpensively replaced.

The clothes treating device 100 may be any device adapted to treat such as wash or dry clothes, for example, a washing machine, a washing and drying machine, or a clothes dryer, as long as the device is applicable to the invention.

The drawer panel 10 may be a panel of a drawer-type detergent box, a water box, or another component of the clothes treating device 100.

The first portion 12 may provide an appearance function for the drawer panel 10 by virtue of the decoration portion 20, and may be engaged with the second portion 22 and other components, for example, a decorating member 19 through the assembling portion 18. The decoration portion 20 may have any structure changing according to an industrial design. The second portion 22 may provide an assembly function for the drawer panel 10 by virtue of the mounting portion 24, so as to realize assembly between the drawer panel 10 and another component of the clothes treating device 100, for example, a drawer (not shown in the figure) located behind the drawer panel 10. The mounting portion 24 may be usually unchanged or substantially unchanged.

In this specification, unless otherwise specified, "front" and "rear" may be used as orientations of the clothes treating device 100 relative to a user. The orientation close to the user is the "front", and the orientation far away from the user is "rear".

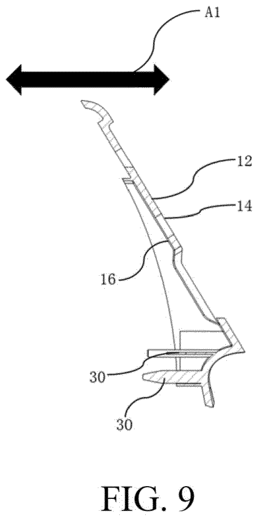

In some embodiments, the first portion 12 is a plastic part formed through injection molding, and is provided with a first demolding direction A1 (referring to FIG. 9), and the first portion 12 does not include two opposite faces interfering with the first demolding direction A1 in the first demolding direction A1.

In this way, a mold slider may not be used when the first portion 12 is manufactured, which can help to simplify a mold and a manufacturing process of the drawer panel 10 of the clothes treating device 100.

A plastic part formed through injection molding is provided with a demolding direction. When the plastic part includes two opposite faces interfering with the demolding direction, a mold slider needs to be used, to ensure smooth demolding. The "interfering with" may include intersecting with the demolding direction. Therefore, when the first portion 12 is the plastic part formed through the injection molding, and does not include the two opposite faces interfering with the first demolding direction A1 in the first demolding direction A1 (a demolding direction of the first portion), the slider may be unnecessarily used in a mold of the first portion 12, to demold the first portion 12. In this way, the mold of the first portion 12 is simplified, thereby simplifying the mold and the manufacturing process of the drawer panel 10 of the clothes treating device 100.

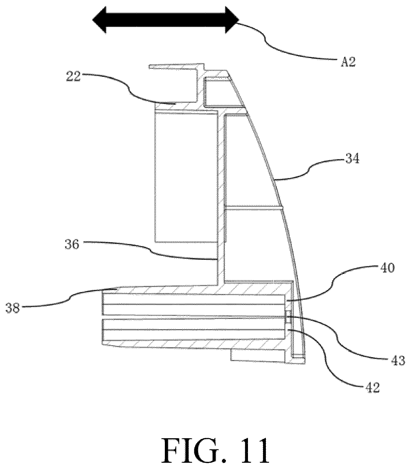

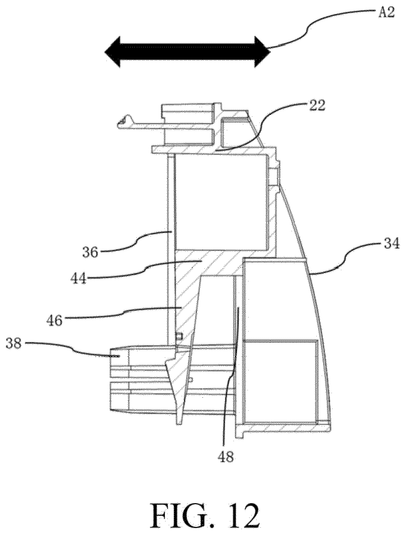

In some embodiments, the second portion 22 is a plastic part formed through injection molding, and is provided with a second demolding direction A2 (referring to FIG. 11 and FIG. 12), and the second portion 22 does not include two opposite faces interfering with the second demolding direction A2 in the second demolding direction A2.

In this way, a mold slider may not be used when the second portion 22 is manufactured, which can help to simplify the mold and the manufacturing process of the drawer panel 10 of the clothes treating device 100.

As described above, when the second portion 22 is the plastic part formed through the injection molding, and does not include the two opposite faces interfering with the second demolding direction A2 in the second demolding direction A2 (a demolding direction of the second portion), the slider may be unnecessarily used in a mold of the second portion 22, to demold the second portion 22. In this way, the mold of the second portion 22 is simplified, thereby simplifying the mold and the manufacturing process of the drawer panel 10 of the clothes treating device 100.

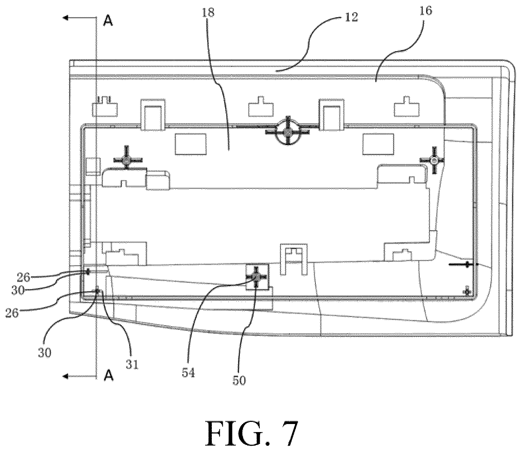

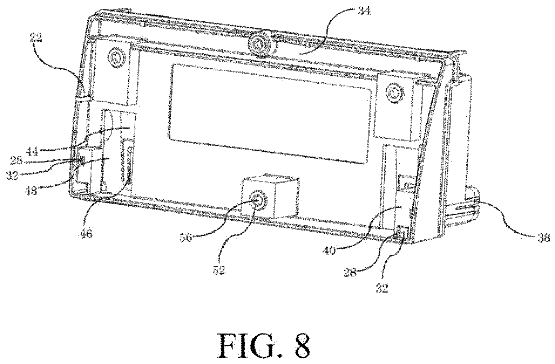

FIG. 7 is a schematic rear view of a first portion of the drawer panel in FIG. 4. FIG. 8 is a schematic three-dimensional diagram of a second portion of the drawer panel in FIG. 4. As shown in FIG. 7 and FIG. 8, in some embodiments, the first portion 12 includes a first fitting portion 26 assembled with the second portion 22, the mounting portion 24 includes a second fitting portion 28 assembled with the first fitting portion 26, and the first fitting portion 26 is located at the first rear surface 16.

In this way, the second portion 22 can be engaged with the first rear surface 16 of the first portion 12. In some embodiments, the first fitting portion 26 is located at the assembling portion 18.

In this way, the aesthetics of the appearance of the drawer panel 10 of the clothes treating device 100 can be improved.

For example, the first fitting portion 26 is located at the assembling portion 18, and the assembling portion 18 may be subsequently covered by, for example, the decorating member 19 to improve the aesthetics of the appearance of the drawer panel 10, to avoid affecting the appearance of the drawer panel 10 when being located at, for example, the decoration portion 20.

In some embodiments, the first fitting portion 26 includes a convex column 30, and the second fitting portion 28 includes a hole 32.

In this way, assembly between the first fitting portion 26 and the second fitting portion 28 can be simply and easily realized.

For example, the assembly between the first fitting portion 26 and the second fitting portion 28 can be realized by inserting the convex column 30 into the hole 32.

The convex column 30 may be a column with any structure protruding from the first rear surface 16, as long as the column is applicable to the invention. For example, the convex column 30 may be a substantially "cross"-shaped column with sharp ribs 31 on sides, or another type of column. When the convex column 30 with the sharp ribs 31 is assembled with the hole 32, by means of interference fit, one side of the convex column 30 may abut against the hole 32, and a sharp rib 31 on an other side is damaged, thereby precisely positioning the first portion 12 and the second portion 22, and reducing tolerance accumulation.

The hole 32 may be a hole with any structure adapted to fit in with the convex column 30, for example, may be a through hole, as long as the hole is applicable to the invention.

FIG. 9 is a schematic cross-sectional view along a line A-A in FIG. 7. As shown in FIG. 9, in some embodiments, the convex column 30 extends rearward from the first rear surface 16 in the first demolding direction A1.

In this way, the first portion 12 can have a simple structure, and the mold slider may not be used, which can help to simplify the mold and the manufacturing process of the drawer panel 10 of the clothes treating device 100.

The convex column 30 has an extension direction consistent with the first demolding direction A1, and is in a solid structure, and the first portion 12 does not include the two opposite faces interfering with the first demolding direction A1 in the first demolding direction A1. Therefore, the first portion 12 has a simple structure, and can be directly demolded in the first demolding direction A1 during manufacturing, so that there is no need to use the mold slider. Therefore, the mold and the manufacturing process of the drawer panel 10 of the clothes treating device 100 can be simplified.

Referring to FIG. 5 and FIG. 6, in some embodiments, the second portion 22 includes a second front surface 34 and a second rear surface 36, and the second front surface 34 and the first rear surface 16 are engaged with each other.

In this way, the first portion 12 and the second portion 22 can be engaged together in a front-rear direction.

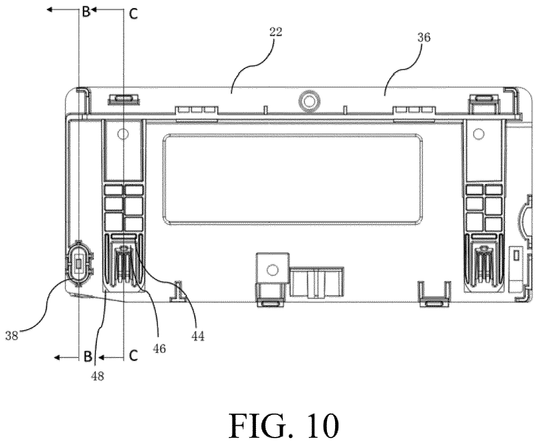

FIG. 10 is a schematic rear view of a second portion. FIG. 11 is a schematic cross-sectional view along a line B-B in FIG. 10. Referring to FIG. 8, FIG. 10, and FIG. 11, in some embodiments, the mounting portion 24 includes a first engagement portion 38 extending rearward from the second rear surface 36 in the second demolding direction A2, the second portion 22 includes a partition 40 that is located between and separates the first engagement portion 38 and the second front surface 34, and the partition 40 includes a solid portion 42 and/or a hollow portion 43 running through the solid portion 42 in the second demolding direction A2.

In this way, the second portion 22 can have a simple structure, and the mold slider may not be used, which can help to simplify the mold and the manufacturing process of the drawer panel 10 of the clothes treating device 100.

For example, it can be seen from FIG. 8, FIG. 10, and FIG. 11 that, an extension direction of the first engagement portion 38 of the second portion 22 of the drawer panel 10 of the clothes treating device 100 of the present invention is consistent with the second demolding direction A2, the partition 40 between the first engagement portion 38 and the second front surface 34 includes the solid portion 42 and/or the hollow portion 43 running through the solid portion 42 in the second demolding direction A2, and the second portion does not include the two opposite faces interfering with the second demolding direction A2 in the second demolding direction A2. Therefore, the second portion 22 has a simple structure, and can be directly demolded in the second demolding direction A2 during manufacturing, so that there is no need to use the mold slider. Therefore, the mold and the manufacturing process of the drawer panel 10 of the clothes treating device 100 can be simplified.

The hollow portion 43 may be the hole 32 assembled with the convex column 30.

FIG. 12 is a schematic cross-sectional view along a line C-C in FIG. 10. Referring to FIG. 8, FIG. 10, and FIG. 12, in some embodiments, the mounting portion 24 includes a second engagement portion 44 that is depressed rearward from the second front surface 34 and bent downward to extend, the second engagement portion 44 includes a droop portion 46, and the second portion 22 includes a cavity 48 opposite to the droop portion 46.

In this way, the second portion 22 can have a simple structure, and the mold slider may not be used, which can help to simplify the mold and the manufacturing process of the drawer panel 10 of the clothes treating device 100.

For example, it can be seen from FIG. 8, FIG. 10, and FIG. 12 that, the second engagement portion 44 of the second portion 22 of the drawer panel 10 of the clothes treating device 100 of the present invention is depressed rearward from the second front surface 34 and bent downward to extend, the second portion 22 includes the cavity 48 opposite to the droop portion 46 of the second engagement portion 44, and does not include the two opposite faces interfering with the second demolding direction A2 in the second demolding direction A2. Therefore, the second portion 22 has a simple structure, and can be directly demolded in the second demolding direction A2 during manufacturing, so that there is no need to use the mold slider. Therefore, the mold and the manufacturing process of the drawer panel 10 of the clothes treating device 100 can be simplified.

In summary, compared with the drawer panel 11 shown in FIG. 1 to FIG. 3, each of the first portion 12 and the second portion 22 of the drawer panel 10 of the clothes treating device 100 of the present invention does not include the two opposite faces interfering with the demolding direction in the demolding direction, and can be directly demolded during manufacturing, so that there is no need to use the mold sliders. The drawer panel 10 has a simple structure, and simplifies the mold and the manufacturing process.

Referring to FIG. 4 and FIG. 5, in some embodiments, the first rear surface 16 completely covers the second front surface 34. In this way, the aesthetics of the appearance of the drawer panel 10 of the clothes treating device 100 can be improved.

When the first rear surface 16 completely covers the second front surface 34, during use of the clothes treating device 100, only the first portion 12 providing the appearance function can be usually seen from the front of the drawer panel 10, while the second portion 22 providing the assembly function and the mounting portion 24 thereof cannot be seen, thereby improving the aesthetics of the appearance of the drawer panel 10.

Referring to FIG. 7 and FIG. 8, in some embodiments, the first portion 12 includes a first reference portion 50, and the second portion 22 includes a second reference portion 52 corresponding to the first reference portion 50.

In this way, the first portion 12 and the second portion 22 can be positioned relative to each other and engaged.

When the first portion 12 and the second portion 22 need to be engaged, the first portion 12 and the second portion 22 can be positioned through the first reference portion 50 and the second reference portion 52, so that the first portion 12 and the second portion 22 are smoothly and easily engaged.

The first reference portion 50 and the second reference portion 52 can have any possible structure, as long as the structure is applicable to the invention.

In some embodiments, the first reference portion 50 is located at the first rear surface 16, and the second reference portion 52 is located at the second front surface 34.

In this way, the first reference portion 50 and the second reference portion 52 can simply and conveniently correspond to each other.

For example, when the first portion 12 and the second portion 22 are engaged in the front-rear direction, the first reference portion 50 and the second reference portion 52 can be aligned with each other as long as the first rear surface 16 and the second front surface 34 are opposite to each other.

In some embodiments, the first reference portion 50 and the second reference portion 52 abut against each other.

In this way, the first portion 12 and the second portion 22 can be accurately positioned relative to each other.

When the first reference portion 50 and the second reference portion 52 abut against each other, a positioning error can be reduced, so that the first portion 12 and the second portion 22 are accurately positioned relative to each other.

In some embodiments, the first reference portion 50 includes a protruding portion 54, and the second reference portion 52 includes a concave hole portion 56 capable of accommodating the protruding portion 54.

In this way, the first reference portion 50 and the second reference portion 52 can be precisely positioned relative to each other.

When the first portion 12 and the second portion 22 are positioned relative to each other through the first reference portion 50 and the second reference portion 52, the protruding portion 54 is inserted into the concave hole portion 56, so that the first reference portion 50 and the second reference portion 52 precisely correspond to each other, and the first portion 12 and the second portion 22 are precisely positioned relative to each other.

The protruding portion 54 may be, for example, a column protruding from the first rear surface 16, such as, a hollow cylinder, or a lug.

The concave hole portion 56 may be, for example, a circular or square through hole capable of accommodating the protruding portion 54.

The various specific implementations described above and shown in the accompanying drawings are only used to illustrate the invention, but are not all of the invention. Any variation made by a person of ordinary skill in the art to the invention within the scope of the basic technical concept of the invention shall fall within the protection scope of the invention.

## Claims

1. A clothes treating device (100) comprising a drawer panel (10), **characterized in that**, the drawer panel (10) comprises:
a first portion (12), comprising a first front surface (14), a first rear surface (16), an assembling portion (18), and a decoration portion (20) at least partially enclosing the assembling portion (18); and
a second portion (22), engaged with the first rear surface (16) and comprising a mounting portion (24).

2. The clothes treating device (100) according to claim 1, **characterized in that**, the first portion (12) is a plastic part formed through injection molding, and is provided with a first demolding direction (A1), and the first portion (12) does not comprise two opposite faces interfering with the first demolding direction (A1) in the first demolding direction (A1).

3. The clothes treating device (100) according to claim 1 or 2, **characterized in that**, the second portion (22) is a plastic part formed through injection molding, and is provided with a second demolding direction (A2), and the second portion (22) does not comprise two opposite faces interfering with the second demolding direction (A2) in the second demolding direction (A2).

4. The clothes treating device (100) according to any one of the preceding claims, **characterized in that**, the first portion (12) comprises a first fitting portion (26) assembled with the second portion (22), the mounting portion (24) comprises a second fitting portion (28) assembled with the first fitting portion (26), and the first fitting portion (26) is located at the first rear surface (16).

5. The clothes treating device (100) according to claim 4, **characterized in that**, the first fitting portion (26) is located at the assembling portion (18).

6. The clothes treating device (100) according to claim 4 or 5, **characterized in that**, the first fitting portion (26) comprises a convex column (30), and the second fitting portion (28) comprises a hole (32).

7. The clothes treating device (100) according to claim 6, **characterized in that**, the convex column (30) extends rearward from the first rear surface (16) in the first demolding direction (A1).

8. The clothes treating device (100) according to any one of the preceding claims, **characterized in that**, the second portion (22) comprises a second front surface (34) and a second rear surface (36), and the second front surface (34) and the first rear surface (16) are engaged with each other.

9. The clothes treating device (100) according to claim 8, **characterized in that**, the mounting portion (24) comprises a first engagement portion (38) extending rearward from the second rear surface (36) in the second demolding direction (A2), the second portion (22) comprises a partition (40) that is located between and separates the first engagement portion (38) and the second front surface (34), and the partition (40) comprises a solid portion (42) and/or a hollow portion (43) running through the solid portion (42) in the second demolding direction (A2).

10. The clothes treating device (100) according to claim 8 or 9, **characterized in that**, the mounting portion (24) comprises a second engagement portion (44) that is depressed rearward from the second front surface (34) and bent downward to extend, the second engagement portion (44) comprises a droop portion (46), and the second portion (22) comprises a cavity (48) opposite to the droop portion (46).

11. The clothes treating device (100) according to one of claims 8 to 10, **characterized in that**, the first rear surface (16) completely covers the second front surface (34).

12. The clothes treating device (100) according to any one of the preceding claims, **characterized in that**, the first portion (12) comprises a first reference portion (50), and the second portion (22) comprises a second reference portion (52) corresponding to the first reference portion (50).

13. The clothes treating device (100) according to claim 12, **characterized in that**, the first reference portion (50) is located at the first rear surface (16), and the second reference portion (52) is located at the second front surface (34).

14. The clothes treating device (100) according to claim 12 or 13, **characterized in that**, the first reference portion (50) and the second reference portion (52) abut against each other.

15. The clothes treating device (100) according to one of claims 12 to 14, **characterized in that**, the first reference portion (50) comprises a protruding portion (54), and the second reference portion (52) comprises a concave hole portion (56) capable of accommodating the protruding portion (54).
